**Europäisches Patentamt**

**European Patent Office**

**Office européen des brevets**

(19)

(11) Numéro de publication: **0 127 112**
**A1**

(12)

# DEMANDE DE BREVET EUROPEEN

(21) Numéro de dépôt: **84105823.3**

(22) Date de dépôt: **22.05.84**

(51) Int. Cl.³: **G 04 C 13/11**
**H 02 K 37/00**

(30) Priorité: **26.05.83 CH 2881/83**

(43) Date de publication de la demande:
**05.12.84 Bulletin 84/49**

(84) Etats contractants désignés:
**DE FR GB**

(71) Demandeur: **ETA S.A. Fabriques d'Ebauches**
**Schild-Rust-Strasse 17**
**CH-2540 Grenchen(CH)**

(72) Inventeur: **Schaffner, Jean-Claude**
**Chemin de l'Etang 6**
**CH-2800 Delémont(CH)**

(74) Mandataire: **Barbeaux, Bernard et al,**
**c/o ASUAG - Société Générale de l'Horlogerie Suisse S.A.**
**6, Faubourg du Lac**
**CH-2501 Bienne(CH)**

(54) Ensemble moteur fonctionnant pas-à-pas.

(57) L'ensemble moteur comprend, en plus d'un moteur pas-à-pas (1) et de son circuit de commande (41) qui sont conçus pour que le rotor (15) du moteur ne tourne nomalement que dans un seul sens, un dispositif d'inversion de sens de rotation (61) qui comporte au moins un élément magnétique (63) et des moyens (81) pour déplacer cet élément entre une position de retrait dans laquelle il n'a aucun effet sur le fonctionnement du moteur et une position de travail dans laquelle il oblige le rotor à changer de position de repos et à tourner en sens inverse.

Fig.2

EP 0 127 112 A1

## Ensemble moteur fonctionnant pas-à-pas

La présente invention a pour objet un ensemble moteur fonctionnant pas-à-pas et utilisable, plus particulièrement mais non exclusivement, dans une montre électronique à affichage analogique. Plus précisément l'invention concerne un ensemble moteur de type pas-à-pas capable de fonctionner de manière réversible, c'est-à-dire dans les deux sens, avant et arrière.

Par ensemble moteur il faut entendre non seulement le moteur pas-à-pas proprement dit, mais également les moyens de commande associés qui permettent de lui appliquer des impulsions motrices pour le faire tourner et de contrôler son sens de rotation.

La plupart des montres à affichage analogique conventionnelles sont munies d'un moteur pas-à-pas monophasé bipolaire, de type Lavet, composé d'un rotor comprenant un aimant permanent généralement cylindrique, à aimantation diamétrale, d'un stator formé de deux parties polaires qui entourent le rotor et sont réunies entre elles par des zones de haute réluctance constituées par des entrefers lorsque le stator est en deux pièces ou des isthmes dans le cas d'un stator en une seule pièce, et d'une bobine de commande entourant un noyau couplé magnétiquement au stator. Le stator est conformé de manière à créer pour le rotor un axe d'équilibre statique incliné d'un certain angle par rapport à l'axe joignant les entrefers ou les isthmes. Le rotor possède ainsi deux positions de repos déterminées, angulairement distante de 180°.

A ce moteur est associé un circuit de commande qui, en réponse à des impulsions basse fréquence qu'il reçoit d'une base de temps comprenant un oscillateur à quartz et un diviseur de fréquence, produit et applique à la bobine de commande des impulsions motrices de polarité alternée qui font tourner le rotor par pas de 180° dans le sens correspondant au sens normal de rotation des aiguilles ou sens horaire. La durée de ces impulsions motrices, généralement de 7,8 ms, est choisie pour assurer un fonctionnement stable du moteur.

Un tel système présente un grave inconvénient. La recherche d'un rendement optimal pour le moteur impose de donner à l'angle que fait l'axe joignant les entrefers ou les isthmes une valeur d'environ 45°, ce qui crée un déphasage d'autant entre les couples auxquels est soumis le rotor, plus précisément le couple de positionnement dû au flux magnétique de l'aimant seul, qui définit les positions d'équilibre statique du rotor lorsque le moteur n'est pas alimenté en courant et le couple mutuel aimant-bobine dû à l'interaction entre le flux de l'aimant et le flux qu'engendre la bobine lorsqu'elle est parcourue par un courant. Un tel déphasage empêche de pouvoir inverser le sens de rotation du moteur simplement en inversant l'ordre des impulsions motrices positives et négatives qui lui sont appliquées lorsque la montre fonctionne normalement. Cette non-réversibilité oblige a prévoir dans ces montres conventionnelles, pour permettre de modifier les informations affichées, par exemple pour corriger l'heure ou changer de fuseau horaire, soit des systèmes mécaniques qui permettent une modification dans les deux sens, avance et retard, mais qui sont encombrants, relativement complexes et le plus souvent de grande précision donc coûteux, soit des dispositifs électroniques n'assurant qu'une correction unidirectionnelle. Dans ce second cas le moteur est, lors d'une correction, alimenté par des impulsions dont la fréquence, fixe ou dépendante de la vitesse d'actionnement d'un organe de commande manuelle, est nettement supérieure à celle des impulsions qu'il reçoit en mode de fonctionnement normal. Toutefois pour que le moteur puisse répondre à chacune des impulsions de correction, cette fréquence doit rester assez basse, généralement ne pas dépasser 32 ou 64 Hz, d'où des temps de correction qui peuvent être dans certains cas très longs.

De nombreuses solutions ont été proposées pour résoudre ce problème. Une première possibilité consiste à mettre au point des moteurs spécialement conçus pour tourner dans les deux sens. Il existe par exemple des moteurs biphasés dont les deux bobines sont alimentées soit simultanément, soit alternativement, qui ont un très bon rendement, fournissent un couple utile important et dont les domaines de fonctionnement en fréquence et/ou en tension sont très larges mais qui présentent deux inconvénients graves pour une application horlogère: ils sont plus encombrants et d'un prix de revient beaucoup plus élevé que les moteurs conventionnels.

Une autre possibilité consiste à continuer d'utiliser le même moteur sans le modifier et à lui adjoindre un dispositif de commande capable de produire et de lui appliquer des impulsions motrices adéquates pour le faire tourner dans le sens anti-horaire, soit directement à partir de sa position d'équilibre stable, à l'aide par exemple de deux impulsions de polarité différente, soit en soumettant le rotor à un mouvement de balancement. Dans ce dernier cas le moteur reçoit un première impulsion qui fait tourner le rotor dans le sens normal juqu'à une certaine position correspondant à plus ou à moins d'un pas selon la durée choisie pour cette impulsion. Lorsque le rotor a atteint cette position, le dispositif de commande envoie au moteur une ou deux autres impulsions de durée et de polarité convenables dont l'énergie s'ajoute à celle acquise par le rotor lors de son mouvement dans le sens horaire et permet à celui-ci de tourner dans le sens inverse. De tels systèmes permettent de continuer à bénéficier des avantages des moteurs traditionnels qui sont peu volumineux, simples et de faible coût tout en ayant un rendement et une consommation satisfaisants en régime de marche normale. Par contre les performances en marche arrière sont médiocres et le circuit de commande qui doit fournir des impulsions successives de polarités et souvent de durées différentes est nécessairement complexe. De plus la plage et la sécurité de fonctionnement sont limitées par le fait qu'aux instants où les différentes impulsions sont appliquées la position du rotor est mal définie en raison des variations des conditions de fonctionnement, notamment des modifications de charge et des dispersions dues à la fabrication. Il est possible d'éviter ce dernier inconvénient en prévoyant un dispositif pour détecter l'instant où un paramètre représentatif du mouvement du rotor, par exemple la tension induite ou le courant induit dans la bobine, passe par une valeur particulière et pour appliquer une impulsion motrice au moment le plus favorable, mais cela rend le circuit de commande du moteur encore plus compliqué.

Une autre solution connue consiste à ramener l'angle entre l'axe joignant les zones à haute réluctance du stator et l'axe d'équilibre statique à une valeur comprise entre 30° et 0°, la limite supérieure qui correspond au couple de sortie le plus élevé en marche avant étant réservée à des moteurs susceptibles d'être soumis à une charge importante, par exemple d'entraîner un mécanisme de calendrier, la valeur inférieure étant au contraire choisie pour des charges faibles et pour obtenir les mêmes performances en marche avant et arrière. Un tel moteur peut être commandé dans les deux sens par des impulsions simples alternées, de même durée; il suffit d'inverser l'ordre des polarités. De plus les modifications par rapport à un moteur unidirectionnel sont minimes et n'entraînent pas d'augmentation du prix de revient. Cette solution présente toutefois deux inconvénients importants: tout d'abord la possibilité de tourner dans les deux sens est obtenue au prix d'une nette diminution des performances en marche avant par rapport à celles du moteur unidirectionnel. Ensuite il y a le risque d'une inversion involontaire du sens de rotation lorsque le rotor rate ou franchit accidentellement un pas.

On connait également des moteurs à stator symétrique dans lesquels le couple de positionnement $\pi$-périodique est remplacé par un couple d'indexage produit par un aimant permanent placé au voisinage de l'un des entrefers du stator. Le rotor qui n'a plus alors qu'une seule position de repos, tourne chaque fois de 360° sous l'effet de deux impulsions successives de polarités opposées, l'ordre de succession des polarités de ces deux impulsions déterminant le sens de rotation, d'où l'inconvénient d'un circuit de commande relativement compliqué surtout si, comme pour un moteur à balancement, on prévoit des moyens pour adapter les impulsions motrices aux caractéristiques du moteur qui ne sont pas parfaitement reproductibles et qui peuvent varier dans le temps et aux modifications des conditions dans lesquelles le moteur est placé, ceci en vue d'en améliorer la plage et la sécurité de fonctionnement.

Par ailleurs les brevet suisse No 613 349 décrit un dispositif moteur pour montre dont l'un des éléments est un moteur pas-à-pas monophasé bipolaire dépourvu de tout moyen permettant d'imposer au rotor des positions de repos précises. Le stator réalisé en une seule pièce présente en effet un évidement central parfaitement cylindrique, c'est-à-dire sans encoches, ni plats, ni autres éléments de disymétrie équivalents, à l'intérieur duquel est monté coaxialement le rotor. L'autre partie de ce dispositif comprend une pièce en matériau magnétique de haute perméabilité qui est fixée sur un support monté de façon à pouvoir pivoter autour d'un axe parallèle à celui du rotor, sur l'un des éléments du bâti de la montre qui portent les paliers du rotor. Ce support pivotant qui est couplé mécaniquement à un organe de commande manuelle, permet de déplacer la pièce en matériau magnétique entre deux positions extrêmes qui sont situées au droit et à faible distance de l'entrefer entre le rotor et le stator du moteur et qui déterminent pour le rotor deux axes d'équilibre statique différents tels que, en réponse à une même impulsions motrice, le moteur tourne dans le sens horaire si le rotor occupait avant cette impulsion une position de repos dans laquelle son axe d'aimantation était dirigé suivant l'un de ces axes et dans le sens contraire si le rotor était positionné suivant l'autre axe. Il est donc possible avec ce dispositif de faire fonctionner le moteur dans les deux sens tout en utilisant les mêmes impulsions de commande simples et sans même avoir à modifier l'ordre de leurs polarité. Il suffit, pour inverser le sens de marche, de changer de position la pièce magnétique entre deux impulsions motri- ces, en actionnant l'organe de commande manuelle. D'autre part, les performances de cet ensemble moteur peuvent théoriquement, dans les deux sens, égaler celles d'un moteur unidirectionnel classique et le risque d'une inversion involontaire de sens de rotation est évité.

Cette solution a toutefois certains désavantages. Aux dispersions inhérentes à la fabrication du moteur s'ajoutent celles qui sont propres au réglage difficile des positions de la pièce en matériau magnétique par rapport à ce dernier. Cette pièce sera plus ou moins proche, d'une part, de la face du moteur du côté de laquelle elle est placée et, d'autre part, de l'axe du rotor et il existera forcément des différences en ce qui concerne les angles entre les axes d'équilibre statique définis par les positions extrêmes qu'elle peut occuper et la direction joignant les isthmes du stator. Il en résultera des variations au niveau de l'intensité des couples de positionnement et de leur déphasage par rapport au couple mutuel aimant-bobine qui feront que, la plupart du temps, les performances effectivement obtenues seront nettement moins bonnes que celles théoriquement prévues, ceci aussi bien pour le sens horaire que pour le sens inverse. De plus, toujours en raison de ces dispersions, il n'est pas impossible d'aboutir à des performances meilleures en marche arrière qu'en marche avant, ce qui est anormal. Enfin, les positions de repos du rotor risquent de devenir moins bien définies au cours du temps du fait de l'usure du mécanisme de déplacement de la pièce magnétique et il est particulièrement gênant que ceci puisse entraîner un mauvais fonctionnement de la montre pas seulement aux moments des corrections, mais aussi en régime de marche normale.

L'invention a pour but de fournir un ensemble moteur qui permet de remédier aux inconvénients de ces différentes solutions connues.

Ce but est atteint grâce au fait que l'ensemble moteur selon l'invention, qui comprend un moteur pas-à-pas comportant un rotor, un stator, une bobine couplée magnétiquement au stator, et des moyens de positionnement pour assurer au rotor au moins une première position de repos; et un circuit de commande du moteur pour produire et appliquer à la bobine des impulsions motrices de courant permettant de faire tourner le rotor dans un premier sens de rotation, comprend en plus un dispositif d'inversion de sens de rotation qui comporte au moins un élément magnétique et des moyens pour déplacer cet élément entre une position de retrait suffisamment éloignée du rotor pour laisser celui-ci occuper sa première position de repos lorsqu'aucun courant ne circule dans la bobine du moteur et tourner dans le premier sens de rotation en réponse aux impulsions motrices qui sont appliquées à la bobine, et une position de travail dans laquelle l'élément magnétique impose au rotor au moins une seconde position de repos pour laquelle celui-ci est amené à tourner dans un second sens de rotation, opposé au premier, en réponse aux impulsions motrices.

De plus, le dispositif d'inversion de sens de rotation est de préférence conçu pour que, lorsqu'il occupe sa position de travail, l'élément magnétique coopère avec les moyens de positionnement du moteur pour soumettre le rotor à un couple de positionnement résultant d'intensité sensiblement égale à celle du couple de positionnement créé par les moyens de positionnement lorsque l'élément magnétique est en position de retrait, ces deux couples étant simplement déphasés angulairement l'un par rapport à l'autre.

Dans ce cas, le déphasage entre ces deux couples peut avantageusement être celui qui permet d'obtenir des performances pratiquement identiques dans les deux sens.

D'une façon générale, l'invention consiste donc à réaliser un ensemble moteur capable de fonctionner de manière bidirectionnelle en associant à un moteur pas-à-pas et à son circuit de commande qui sont conçus pour ne permettre normalement, à eux seuls, qu'un fonctionnement du moteur dans un seul sens, un dispositif mobile qui peut, sur commande, être amené à proximité du rotor et agir alors magnétiquement sur celui-ci pour modifier sa position de repos de manière à inverser le sens de marche du moteur.

Toutefois il est indéniable qu'à l'heure actuelle et dans le domaine de l'horlogerie c'est lorsque le moteur est un moteur de type Lavet classique que l'invention est surtout intéressante car elle permet alors de continuer à utiliser un tel moteur avec le circuit de commande simple qui lui est généralement associé pour le faire tourner dans un seul sens et à bénéficier de tous ses avantages.

Un ensemble moteur conforme à l'invention comprendra donc le plus souvent un moteur dont le stator présente deux parties polaires entre lesquelles est ménagé un évidement central et qui sont reliées entre elles par deux zones de haute réluctance magnétique, dont le rotor est placé dans l'évidement central du stator et comporte un aimant permanent ayant une paire de pôles magnétiques opposés qui définissent un axe d'aimantation, et dont les moyens de positionnement définissent pour le rotor deux premières positions de repos opposées dans lesquelles l'axe d'aimantation de l'aimant est dirigé suivant un premier axe d'équilibre statique; un circuit de commande prévu pour appliquer à la bobine du moteur des impulsions motrices de polarité alternée; et un dispositif d'inversion de sens de rotation conçu pour définir avec les moyens de positionnement du moteur également deux secondes positions de repos du rotor dans lesquelles l'axe d'aimantation de l'aimant est dirigé suivant un second axe d'équilibre statique, les premier et second axes d'équilibre statique étant inclinées dans des directions opposées par rapport à une droite joignant les zones à haute réluctance magnétique du stator du moteur.

De plus, chacun des axes d'équilibre statique sera de préférence incliné d'un angle d'environ 45° par rapport à la droite joignant les zones à haute réluctance magnétique du stator.

L'ensemble moteur selon l'invention a comme point commun avec le système décrit dans le brevet suisse no 613 349 que l'inversion du sens de rotation du moteur est obtenue uniquement en déplaçant un élément magnétique extérieur entre deux positions, ce qui permet de changer la position de repos du rotor, mais il s'en distingue fondamentalement par le fait que le moteur a les moyens nécessaires pour fonctionner en marche avant, indépendamment de cet élément magnétique qui ne joue plus un rôle que pour la marche arrière. Une montre équipée de cet ensemble moteur ne risquera donc plus de mal fonctionner en régime de marche normale ni même lors d'une correction dans le sens de l'avance, du fait que le dispositif d'inversion de sens de rotation présente un défaut de structure ou n'est pas très bien positionné par rapport au rotor. De plus, étant donné que, d'une part, la position de retrait peut être quelconque, à condition d'être suffisamment éloignée du rotor, et que, d'autre part, des tolérances assez larges peuvent être admises en ce qui concerne la position de travail, vu que la marche arrière n'est que rarement utilisée dans une montre et que, pour ce sens de rotation, la charge du moteur est toujours faible, les problèmes de réglage de la position de l'élément magnétique par rapport au rotor, de dispersion de fabrication et d'usure, importants dans le cas du système connu, sont minimisés. Enfin, non seulement le même circuit de commande, mais également le même moteur peut être fabriqué pour équiper des montres dans lesquelles la correction des informations horaires affichées se fait mécaniquement ou électroniquement mais de façon unidirectionnelle et des montres munies du dispositif d'inversion de sens de rotation qui offrent la possibilité d'une correction électronique dans les deux sens.

D'autres caractéristiques et avantages de l'invention apparaîtront plus clairement à la lecture de la description qui suit de plusieurs modes de mise en oeuvre donnés à titre d'exemples non limitatifs. La description se réfère au dessin annexé sur lequel:

- la figure 1 montre un premier mode possible de réalisation de l'ensemble moteur selon l'invention dans le cas de l'application à une montre électronique. Sur cette figure le moteur pas-à-pas et le dispositif d'inversion de sens de rotation sont représentés schématiquement en plan, lorsque l'élément magnétique est en position de retrait, tandis que le circuit de commande du moteur apparaît sous forme d'un schéma-bloc;

- la figure 1a est une vue en coupe selon le plan I-I de la figure 1;

- la figure 2 montre le même mode de réalisation que la figure 1 mais lorsque l'élément magnétique est en position de travail;

- la figure 2a est la même vue que celle de la figure 1a mais dans le cas de la figure 2;

- la figure 3 est une vue en coupe partielle, selon le plan III-III de la figure 2, du moteur et du dispositif d'inversion de sens de rotation représentés sur les figures 1 et 2;

- la figure 4 montre les impulsions motrices simples que le moteur des figures 1 et 2 reçoit de son circuit de commande;

- la figure 5 est un diagramme théorique représentant les variations, en fonction de la position angulaire θ du rotor, du couple de positionnement et du couple mutuel aimant-bobine qui peuvent être obtenus avec l'ensemble moteur des figures 1 et 2 pour chaque sens de rotation;

- la figure 6 est une vue partielle, en plan, d'un autre mode possible de réalisation de l'ensemble moteur selon l'invention; et

- les figures 7a et 7b sont des vues également partielles et en plan de deux variantes d'une troisième forme d'exécution possible de l'ensemble moteur selon l'invention.

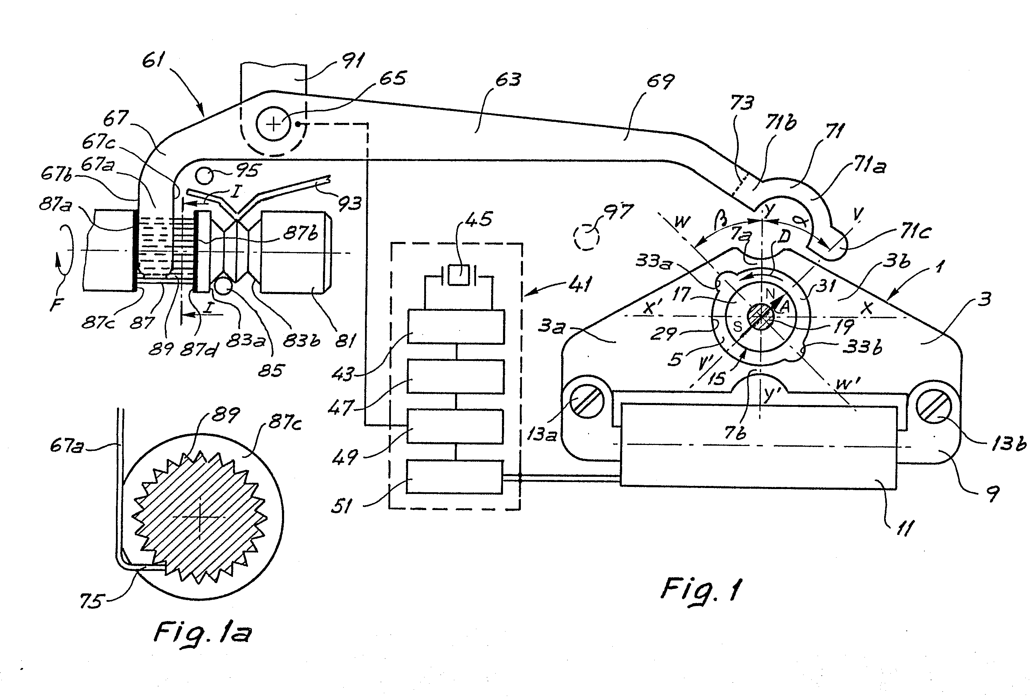

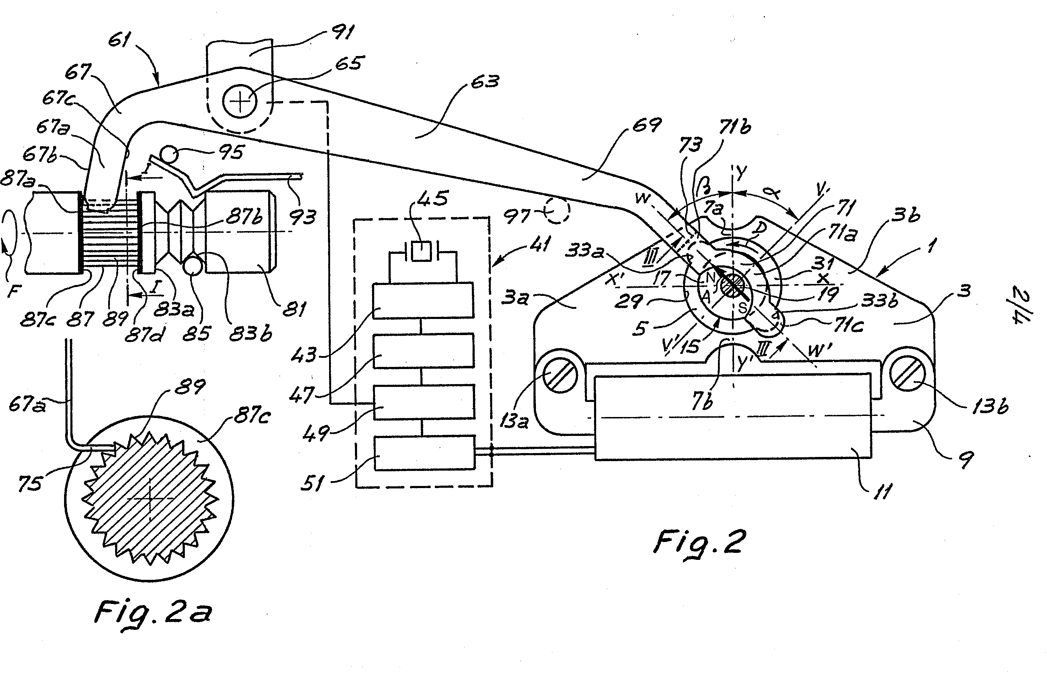

Le moteur pas-à-pas de l'ensemble moteur qui est représenté aux figures 1 et 2 et qui est conçu pour être utilisé dans une montre à affichage analogique, est un moteur monophasé bipolaire tout à fait classique. Ce moteur référencé 1 comprend un stator 3 en une seule pièce essentiellement plane, réalisé en un matériau de haute perméabilité magnétique et qui présente deux parties polaires 3a, 3b, relativement massives, entre lesquelles est ménagé un évidemment central 5. Les deux parties polaires 3a, 3b sont par ailleurs reliées entre elles par deux parties étroites ou isthmes 7a et 7b qui sont situés de part et d'autre de l'évidement central 5 et qui constituent des zones à haute réluctance magnétique. Le stator 3 couplé magnétiquement à une pièce 9, également en matériau magnétique doux, qui forme le noyau d'une bobine 11. Le stator 3 et le noyau 9 sont assemblés par des vis 13a et 13b.

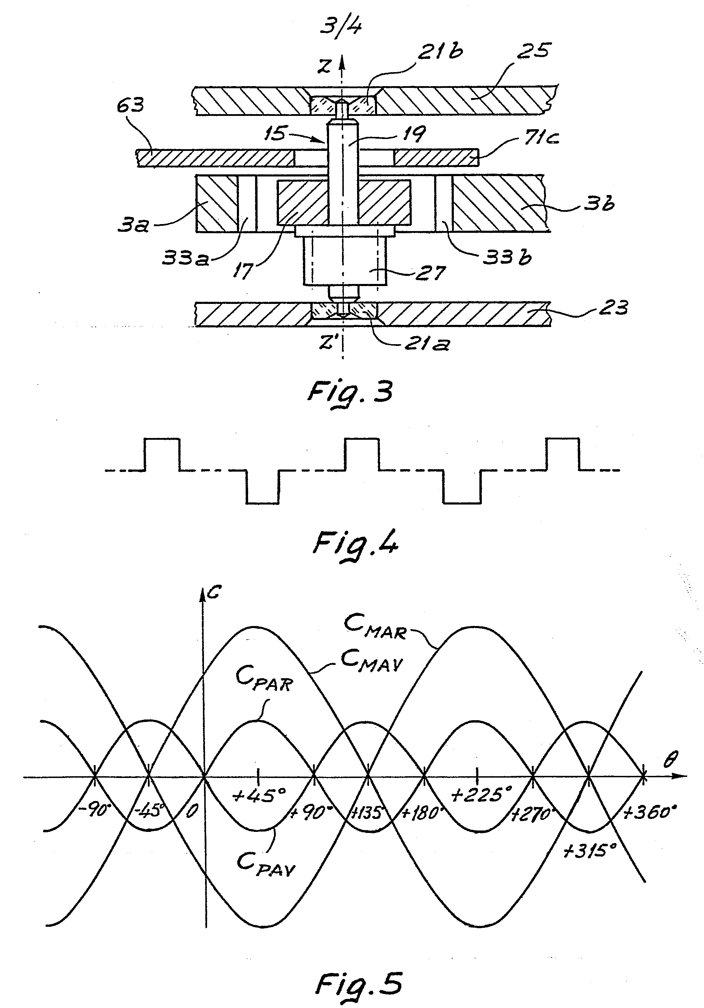

Dans l'évidement central 5 du stator, qui a essentiellement la forme d'un cylindre de révolution, est monté coaxialement un rotor 15. Ce rotor comprend un aimant permanent cylindrique 17 à aimantation diamètrale, fixé sur un arbre 19. Comme le montre la figure 3, l'arbre 19 pivote dans deux paliers 21a et 21b qui sont portés par une platine 23 et un pont 25 de la montre. L'arbre 19 comporte d'autre part un pignon 27 qui, par exemple, dans le cas d'une montre sans aiguille de secondes, engrène avec une roue des minutes non représentée.

Enfin la paroi interne 29 du stator qui délimite l'évidement central 5 et qui est séparée de l'aimant 17 du rotor par un entrefer 31, présente deux encoches 33a, 33b de mêmes dimensions, diamétralement opposées, qui permettent d'imposer au rotor, lorsque celui-ci n'est pas soumis à une influence magnétique extérieure, deux premières positions de repos dans lesquelles l'axe d'aimantation A de l'aimant est dirigé suivant un axe d'équilibre statique V'V sensiblement perpendiculaire à l'axe W'W qui joint les encoches 33a, 33b et faisant avec la direction Y'Y dans laquelle sont situés les isthmes 7a et 7b, un angle $\alpha$ d'environ 45°.

Comme cela a déjà été indiqué, cette valeur de l'angle $\alpha$, qui est égale à celle du déphasage entre le couple de positionnement dû à la présence des encoches 33a, 33b et le couple mutuel aimant-bobine qui agissent sur le rotor, fait que ce dernier ne peut normalement tourner que dans un sens, qui est celui indiqué par la flèche D sur les figures 1 et 2, en réponse à des impulsions motrices simples de polarité alternée telles que celles représentées à la figure 4.

A ce moteur 1 est associé un circuit de commande 41 comprenant un oscillateur 43 avec son résonateur à quartz 45 qui délivre à des étages de division 47 un signal dont la fréquence est, par exemple, de 32 867 Hz. L'ensemble de division fournit à sa sortie des impulsions de temps dont la fréquence est égale à la fréquence de commande du moteur en régime de fonctionnement normal de la montre. Par exemple, dans le cas précédemment envisagé d'une montre sans aiguille de secondes, cette fréquence sera de 1/20ième Hz si l'aiguille des minutes doit avancer de trois pas par minute. Ces impulsions de temps sont envoyées à un circuit logique 49 qui les met en forme et fournit des impulsions de commande d'une durée déterminée, qui peut être de 7,8 ms, à un circuit d'entraînement 51 du moteur. Le circuit d'entraînement 51 comprend classiquement quatre transistors de puissance qui forment un pont dans lequel est branchée la bobine 11 et des moyens tels qu'une bascule de type T et deux portes ET qui commandent la conduction de ces transistors de façon que la bobine reçoive des impulsions motrices de courant de même durée que les impulsions de commande et de polarité alternée, prévues pour faire tourner le rotor dans le sens de la flèche D.

Le circuit logique 49 qui peut être réalisé facilement, sous différentes formes, par l'homme de métier et qui ne sera par conséquent pas décrit en détail, a d'autres fonctions qui seront indiquées par la suite.

Dans le mode de réalisation présentement décrit, le dispositif référencé 61 qui permet d'inverser le sens de marche du moteur, participe également à l'élaboration d'impulsions de correction pour effectuer une mise à l'heure de la montre en l'avançant ou en la retardant.

Ce dispositif d'inversion de sens de rotation 61 comprend une pièce essentiellement plate et mince 63, en forme de bascule à deux bras, qui est réalisée en un matériau magnétique. Pour une raison qui apparaîtra ultérieurement, ce matériau doit être également électriquement conducteur et permettre à la pièce 63 de présenter une bonne élasticité. Ce matériau peut être par exemple du fer doux.

La pièce 63 est montée sur une partie fixe, non représentée, de la montre, de façon à pouvoir pivoter autour d'un axe 65 parallèle à l'axe de rotation Z'Z du rotor 15, entre deux positions extrêmes dans lesquelles elle est représentée aux figures 1 et 2. Ce mouvement de pivotement d'amplitude limitée peut être commandé manuellement au moyen d'une tige rotative à deux positions axiales 81 à laquelle est couplé mécaniquement un premier bras 67 de la bascule 63 et dont seule la partie interne à la montre a été représentée sur le dessin. La liaison entre la tige 81 et la bascule 63 ainsi que la façon de commander les déplacements de cette dernière seront décrites en détail par la suite.

Comme le montre la figure 3, le plan dans lequel est située et pivote la bascule 63 se trouve entre le pont 25 qui supporte l'un des paliers du rotor et la surface supérieure du moteur, très près de celle-ci.

L'une des deux positions extrêmes que la bascule 63 peut occuper est une position de retrait (voir figure 1) suffisamment éloignée de l'aimant 17 pour laisser le rotor occuper ses deux positions de repos définies par les encoches 33a et 33b et permettre au moteur de fonctionner en marche avant, pratiquement comme si le dispositif d'inversion de sens de rotation 61 n'existait pas.

L'autre position extrême (voir figure 2) est au contraire une position de travail pour laquelle la partie terminale 71 du second bras 69 de la bascule 63, c'est-à-dire celui qui n'est pas couplé à la tige de commande et qui s'étend en direction du moteur, se trouve au-dessus de l'évidement central 5 du stator 3 et agit magnétiquement sur l'aimant 17 pour changer les positions de repos du rotor de manière à permettre au moteur de fonctionner en marche arrière, en réponse aux mêmes impulsions motrices que celles qui sont appliquées à la bobine 11 pour faire tourner le moteur en marche avant.

Telle qu'elle apparaît sur les figures 1 et 2, la partie terminale 71 du second bras 69, qui est séparée du reste de la bascule par une ligne en pointillés 73, a la forme d'une portion de couronne 71a flanquée de deux oreilles 71b, 71c, et est dimensionnée de façon que, lorsque la bascule est en position de travail, chacune de ces oreilles recouvre en totalité l'une des encoches 33a, 33b ainsi que la zone de l'entrefer 31 située en face de cette encoche et que la portion intermédiaire 71a contourne alors l'arbre du rotor, naturellement sans le toucher, et se trouve entièrement au-dessus de l'aimant 17 ou, tout au moins, ne déborde pas sensiblement au-dessus de l'entrefer 31. Les deux positions de repos du rotor pour la marche arrière, qui seront qualifiées de "secondes", sont ainsi celles pour lesquelles l'axe d'aimantation A de l'aimant 17 est dans la direction W'W qui joint les encoches et qui constitue par conséquent, pour le rotor, un second axe d'équilibre statique incliné, comme le premier V'V, d'un angle β d'environ 45° par rapport à la droite Y'Y qui joint les isthmes 7a et 7b du stator 3.

De plus, en choisissant correctement les dimensions de la partie terminale 71 ainsi que la distance entre le plan dans lequel elle se trouve et la surface supérieure du stator, en fonction du matériau utilisé pour réaliser la bascule et en tenant compte du fait que l'épaisseur de cette dernière ne doit pas être trop importante pour qu'elle reste élastique, il est possible d'obtenir pour le rotor un couple de positionnement sensiblement de même forme et de même amplitude que celui qui n'est créé que par les encoches 33a et 33b, lorsque la bascule 63 est en position de retrait, ces couples étant seulement déphasés angulairement de 90° l'un par rapport à l'autre.

Ceci est illustré par le diagramme de la figure 4 qui représente la forme théorique des courbes de variation de la valeur de ces couples en marche avant et en marche arrière, appelés respectivement $C_{PAV}$ et $C_{PAR}$, en fonction de la position angulaire $\theta$ du rotor repérée par rapport à la position de repos dans laquelle ce rotor est représenté à la figure 1.

Du fait de la forme cylindrique de l'aimant 17 ces deux couples, en opposition de phase, sont sinusoïdaux. Ils s'annulent tous les deux pour les valeurs 0°, 90°, 180° et 270° de l'angle $\theta$ mais alors que les valeurs 0° et 180° correspondent à des positions d'équilibre stable pour le rotor lorsqu'il tourne dans le sens de la flèche D (voir fig. 1 ou 2), ces mêmes valeurs correspondent à des positions d'équilibre instable de celui-ci lorsqu'il tourne dans le sens contraire et inversement pour les valeurs 90° et 270°.

La figure 4 montre aussi le couple mutuel aimant-bobine $C_{MAV}$ auquel est soumis en plus le rotor lorsqu'une impulsion motrice est appliquée à la bobine 11 pour le faire tourner en avant, ainsi que le couple mutuel $C_{MAR}$ en marche arrière. Ces deux couples sont également sinusoïdaux mais ont une période double de celle des couples $C_{PAV}$ et $C_{PAR}$, c'est-à-dire de 360°. Par ailleurs chacun de ces couples mutuels est évidemment déphasé de 45° par rapport au couple de positionnement correspondant.

Il est clair que la forme qui a été donnée sur les figures 1 et 2 à la partie terminale 71 de la bascule 63 n'est pas la seule à convenir pour que, lorsqu'elle se trouve en position de travail, cette partie terminale puisse créer pour le rotor, en coopération avec les encoches 33a et 33b, un couple de positionnement résultant $C_{PAR}$ déphasé d'environ 90° par rapport à celui, $C_{PAV}$, auquel est soumis le rotor lorsque la bascule occupe sa position de retrait, ni même pour que ces deux couples aient sensiblement la même intensité. Il est possible d'obtenir le même résultat avec un grand nombre d'autres configurations, d'autant plus qu'il n'est évidemment pas nécessaire que les encoches et/ou les zones de l'entrefer 31 situées en face de celles-ci soient totalement recouvertes, ni que le recouvrement soit limité à ces régions. En fait il appartient à l'homme de métier de choisir parmi les multiples possibilités qui s'offrent à lui, celle qui lui paraît être la meilleure.

Le nombre de ces possibilités est encore augmenté si l'on tient compte du fait que ce qui a été dit précédemment, d'une manière générale, à propos du réglage de la position de travail de l'élément magnétique et des tolérances qui peuvent être admises, est également vrai pour la réalisation de cet élément.

Les solutions qui permettent d'imposer au rotor des secondes positions de repos bien définies, symétriques des premières par rapport à la droite Y'Y qui joint les isthmes 7a, 7b du stator, et d'obtenir des couples de positionnement pratiquement identiques pour les deux sens de rotation sont certainement celles qui sont idéales du point de vue des performances du moteur car celles-ci peuvent alors être les mêmes en marche arrière qu'en marche avant. Toutefois ce n'est pas, par exemple, parce qu'une forme de la partie terminale 71 du second bras de la bascule qui rendrait le dispositif d'inversion de sens de rotation très facile à fabriquer, ne permet pas d'obtenir un angle β entre le second axe d'équilibre statique W'W et la droite Y'Y plus grand que 40° ou même 30°, ou des secondes positions de repos parfaitement opposées, que cette forme devrait être systématiquement exclue. Certaines concessions peuvent être faites aux dépens du rendement en marche arrière et même de la sécurité de fonctionnement si l'ensemble moteur est destiné à équiper une montre qui n'est pas prévue pour, par exemple, des changements de fuseau horaire ou un affichage d'une heure d'alarme mémorisée au moyen des aiguilles et qui n'offre à l'utilisateur que la possibilité d'effectuer une simple mise à l'heure. Il sera toujours possible de trouver un compromis pour chaque situation.

Les vues en coupe des figures 1a et 2a complètent les figures 1 et 2 pour montrer comment la tige de manoeuvre 81 est couplée à la bascule 63 pour permettre de commander le déplacement de cette dernière entre ses positions de retrait et de travail et pour que le système formé par la tige et la bascule puisse être utilisé comme commutateur pour produire des impulsions électriques servant à corriger l'heure indiquée par la montre.

On voit que, en plus de deux gorges 83a et 83b qui coopèrent avec un doigt fixe 85 pour définir ses deux positions axiales stables, la tige 81 présente une autre gorge 87, à flancs droits, dans laquelle pênêtre la partie terminale 67a du premier bras 67 de la bascule.

Au bout de ce premier bras 67 se trouve une partie en forme de languette 75 qui s'étend en direction de la tige et dont l'extrêmité vient s'engager dans une denture 89 formée de rainures parallèles à l'axe de la tige, qui est prévue au fond de la gorge 87.

Pour une raison qui apparaîtra par la suite chacun des flancs 87a et 87b de la gorge 87 est revêtu d'une couche électriquement isolante 87c, respectivement 87d.

De plus, la forme et les dimensions du premier bras 67 ainsi que l'emplacement et la largeur de la gorge 87 sont choisis en fonction de la course de la tige et des positions relatives de cette tige, du moteur et de l'axe de pivotement 65 de la bascule pour

1) que la bascule se trouve dans la position qui doit être sa position de retrait et que le côté externe 67b de la partie terminale 67a, qui est droit, soit appliquée contre le flanc 87a de la gorge qui regarde vers l'intérieur de la montre ou, plus précisément contre la couche isolante 87c qui recouvre ce flanc, lorsque la tige est immobile en position poussée (voir figure 1);

2) que, lorsque l'on tire sur la tige sans la tourner, le côté interne 67c de la partie terminale 67a qui est également droit et parallèle au côté externe, vienne s'appuyer contre la couche isolante 87d portée par l'autre flanc 87b, et

3) que, lorsque le premier bras est amené à pivoter autour de l'axe 65 dans le sens pour lequel le second bras 69 se rapproche du rotor 15 du moteur, la bascule atteigne sa position de travail au moment où la partie terminale du premier bras vient buter contre le flanc 87a (voir figure 2).

Par ailleurs, la bascule 63 est en contact électrique direct ou par l'intermédiaire de l'axe de pivotement 65 avec une plage conductrice 91 qui fait partie du circuit imprimé de la montre si celui-ci constitue également le support de la bascule ou qui est reliée de manière adéquate à une piste conductrice de ce circuit de façon à être connectée à une entrée du circuit logique 49.

Enfin, un contact actionné par la tige de commande 81 permet de relier celle-ci au pôle positif de la source de tension d'alimentation de la montre lorsqu'elle est en position tirée. Ce contact comprend une lame conductrice flexible 93 dont une extrémité est fixée de façon appropriée au bâti de la montre et dont l'autre extrémité, qui est libre, peut venir toucher un plot conducteur fixe 95 connecté à la borne positive de la source non représentée.

Ainsi, tant que la tige est en position poussée ou position neutre, même si on la tourne dans un sens ou dans l'autre, la bascule 63 reste en position de retrait du fait que le côté externe 67b de la partie terminale 67a prend alors appui contre la couche isolante 87c qui recouvre le flanc correspondant 87a de la gorge. Dans le cas d'une rotation, du fait de l'élasticité du premier bras 67 et de la sienne propre, la languette 75 saute d'une rainure de la denture 89 à l'autre en rompant momentanément le contact entre la tige et la bascule. Toutefois, comme la tige n'est pas reliée à la source de tension aucun signal n'est transmis au circuit de commande du moteur et le rotor 15 avance alors normalement d'un pas chaque fois qu'une impulsion de temps est délivrée par le diviseur de fréquence 47.

Le fait de faire passer la tige en position tirée ou position de correction ne modifie pas la position de la bascule, car la languette 75 glisse alors simplement dans la rainure dans laquelle elle était initialement engagée. Par contre ceci a pour effet d'amener l'extrémité libre de la lame conductrice 93 au contact du plot 95 et de porter par conséquent la tige, la bascule et la plage conductrice 91 qui sont en contact l'un avec l'autre, au potentiel du pôle positif de la source de tension d'alimentation. Le signal qui apparaît ainsi est reçu par le circuit logique 49 qui possède les moyens de commutation nécessaires pour bloquer les impulsions de temps fournies par le diviseur 47 tant que la tige reste en position de correction.

Si, après l'avoir tirée, on tourne la tige dans le sens indiqué par la flèche F sur le dessin, cette rotation a tendance à écarter encore plus le second bras de la bascule du rotor mais ce mouvement ne se produit pas étant donné que le côté interne 67c du premier bras bute contre la couche isolante 87d portée par le flanc 87b de la gorge. La languette 75 commence donc immédiatement à sauter dans la denture 89 ce qui a pour effet d'interrompre et de rétablir alternativement le contact électrique entre la tige et la bascule et, par conséquent, de faire apparaître au niveau de la plage conductrice 91 des impulsions électriques de commutation dont la fréquence est fonction de la vitesse de rotation de la tige. Ces impulsions sont transmises au circuit logique 49 qui comprend tous les moyens nécessaires, y compris un dispositif anti-rebondissements, pour traiter ces impulsions et les transformer en impulsions de commande de correction de durée et de forme convenable. Ces impulsions de commande de correction dont la fréquence peut être égale ou supérieure à celles des impulsions de commutation sont envoyées au circuit d'entraînement 51 qui réagit en appliquant à la bobine 11 du moteur des impulsions motrices de correction qui, du fait que la bascule est en position de retrait, font tourner le rotor dans le sens de la flèche D, c'est-à-dire en marche avant.

A noter qu'il peut être avantageux de prévoir en plus, dans le circuit logique 49 des moyens pour bloquer par exemple les trois ou les cinq premières impulsions de commutation produites, ceci notamment pour éviter une modification involontaire de l'heure indiquée par la montre.

Si, au contraire, après avoir amené la tige en position de correction on la tourne dans le sens opposé à celui de la flèche F, le bord de la rainure dans laquelle est engagée la languette pousse celle-ci et la bascule pivote. Dans ce cas, la languette ne commence à passer d'une rainure de la denture 89 à l'autre qu'après que le bord du premier bras 67 soit venu buter contre le flanc 87a de la gorge, c'est-à-dire qu'après que la bascule ait atteint sa position de travail. Des impulsions motrices de correction sont alors produites et appliquées au moteur de la même manière que pour une rotation dans l'autre sens mais, comme le rotor a été préalablement obligé par la bascule à passer de l'une de ses premières à l'une de ses secondes positions de repos, ces impulsions font tourner celui-ci en marche arrière.

Un retour de la bascule en position de retrait peut être obtenu soit en tournant la tige dans le sens de la flèche F, soit simplement en la repoussant. Dans le second cas le pivotement de la bascule n'a pas lieu grâce à la denture 89 de la tige et à la languette 75 mais au flanc 87a de la gorge qui pousse la partie terminale 67a du premier bras 67. Naturellement un retour en position neutre de la tige permet par ailleurs de rétablir le régime de marche normale de la montre.

Les couches isolantes 87c et 87d sur les flancs 87a et 87b de la gorge sont évidemment prévues pour qu'il n'y ait plus aucun contact électrique entre la bascule et la tige conductrice 81 au moment où, sautant d'une rainure à l'autre de la denture 89, la languette 75 ne touche plus le fond de la gorge. Ces couches peuvent poser des problèmes de fabrication. Il est possible de les éviter en s'arrangeant pour que, lorsque la tige est au repos, la partie terminale 67a du premier bras de la bascule ne soit engagée que peu profondément dans la gorge 87, de façon à pouvoir en sortir au moment où la languette se soulève pour sauter dans la rainure suivante. Telle quelle cette solution présente un invonvénient. Il se peut en effet que la bascule s'écarte légèrement de sa position de retrait ou de travail au moment où le premier bras 67 n'est plus en contact avec l'un des flancs de la gorge et que la partie terminale 67a ne puisse plus ensuite redescendre à l'intérieur de cette gorge. Il est facile de remédier à cela en chanfreinant convenablement les bords de la gorge. Sous l'action conjuguée des chanfreins et de la rotation de la tige de bascule reprendra sa position correcte entre chaque saut de la languette.

Il faut noter que dans un cas comme dans l'autre, c'est-à-dire avec ou sans couches d'isolement, le système de liaison qui vient d'être décrit ne permet pas seulement de faire pivoter la bascule mais aussi de fixer ses positions extrêmes sans qu'il soit nécessaire d'utiliser d'autres moyens. Toutefois rien n'empêche de prévoir par sécurité au moins une butée fixe comme celle qui est représentée en pointillés sur les figures 1 et 2 et désignée par le repère 97. Une telle butée dont la position correspond à la position de travail de la bascule peut être fixée par exemple sur la face inférieure du pont 25 qui porte l'un des paliers du rotor 15 (voir figure 3). Il serait moins justifié de faire la même chose pour la position de retrait qui, elle, n'a pas besoin de rester bien définie.

Par ailleurs il est clair que ce système de liaison et même, plus généralement, l'utilisation d'une tige rotative à deux positions pour commander les déplacements de la bascule 63 qui présentent comme avantage de permettre d'effectuer des corrections de la même manière qu'avec une montre mécanique classique, n'ont été donnés qu'à titre d'exemple. Il existe de nombreuses autres solutions possibles. L'une d'elles consisterait par exemple à employer une couronne mobile axialement, sur laquelle on presserait pour, à la fois, amener la bascule en position de travail et commander l'envoi au moteur d'impulsions motrices dérivées d'impulsions de 32 ou 64 Hz fournies par le diviseur de fréquence, ceci afin de retarder la montre, et sur laquelle on tirerait pour envoyer des impulsions de correction au moteur sans agir sur la bascule qui conserverait sa position de retrait ou inversément. Une autre possibilité serait de faire appel à deux boutons-poussoirs, un pour avancer, l'autre pour retarder.

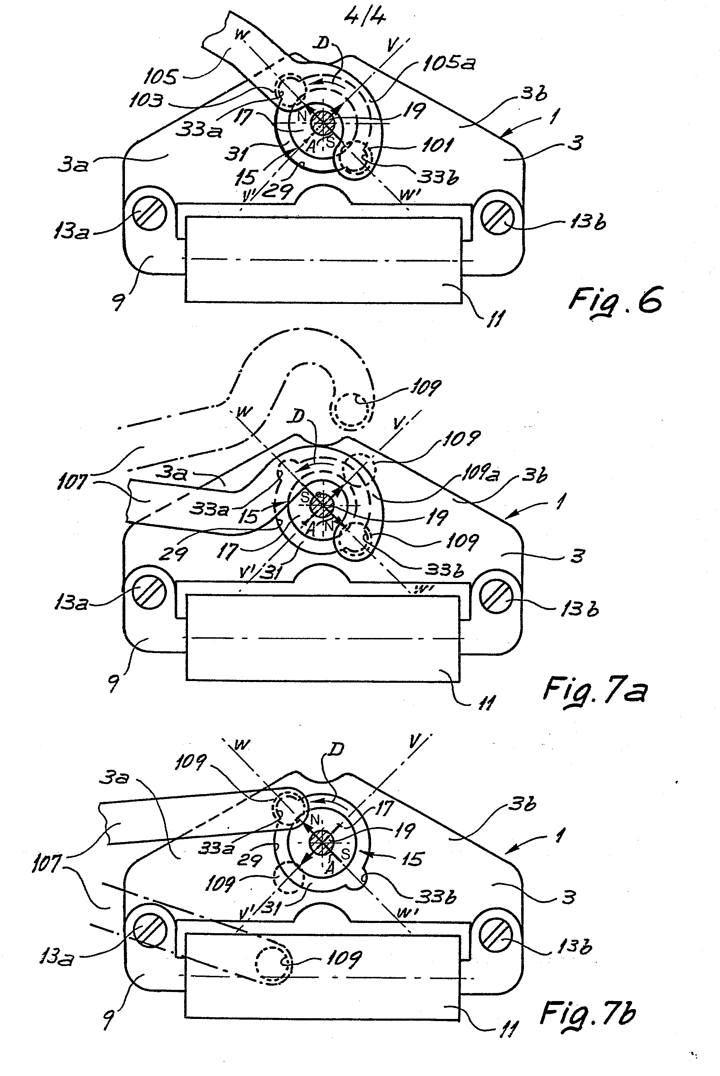

Selon un autre mode de réalisation qui est représenté partiellement à la figure 6 le dispositif d'inversion de sens de rotation qui est également destiné à être associé au moteur 1 déjà décrit, comprend deux pastilles 101, 103, en matériau magnétique qui sont portées par un support 105 en matériau non magnétique. Comme précédemment la bascule 63, le support 105 peut pivoter autour d'un axe non représenté, dans un plan parallèle à la surface supérieure du stator 3, entre une position de retrait et une position de travail dans laquelle il est représenté sur la figure.

Les pastilles 101 et 103 sont montrées sur le dessin comme étant rondes et comme recouvrant chacune totalement une encoche 33a, respectivement 33b, et la zone de l'entrefer 31 du moteur qui est située en face de cette encoche mais ceci n'est pas nécessaire. D'une manière générale il suffit que ces pastilles agissent magnétiquement sur l'aimant 17 du rotor 15 de la même manière que la partie terminale 71 du second bras de la bascule 63 dans le mode de réalisation précédent.

Quant à l'extrémité 105a du support 105 elle peut avoir une forme et des dimensions quelconques à condition de ne pas gêner le mouvement du rotor, puisque ce support est en matériaux non magnétique.

Ce matériau peut être électriquement conducteur ou isolant. Dans le premier cas il est possible de commander le pivotement du support 105 comme précédemment celui de la bascule 63 et de produire des impulsions de correction de la même manière. Dans le second cas il est nécessaire de faire appel à une autre solution qui utilise ou non, comme organe de commande manuel, une tige rotative à deux positions.

Les deux formes possibles de réalisation du dispositif d'inversion de sens de rotation qui viennent d'être décrites peuvent convenir pour une montre conçue pour permettre seulement de corriger l'heure mais pas pour celles qui offrent à l'utilisateur la possibilité de procéder à des changements de fuseau horaire ou de faire afficher par les aiguilles autre chose que l'heure normale, par exemple une heure d'alarme, et ceci pour la raison suivante:

En revenant aux figures 1 et 2, on peut constater que, du fait de la symétrie que présente la partie terminale 71 du second bras de la bascule 63 et de la façon dont cette partie terminale doit s'approcher de l'aimant 17 pour venir occuper sa position de travail, il n'y a pas de raison pour que le rotor 15 tourne dans un sens plutôt que dans l'autre pour changer de position de repos.

En admettant d'une part que la dernière impulsion motrice reçue par le moteur avant le changement de position de la bascule était une impulsion positive qui a amené le rotor dans la position de repos dans laquelle il est représenté à la figure 1, ce qui signifie que la partie polaire 3a du stator 3 constituait, pendant cette impulsion, un pôle magnétique nord et la partie 3b un pôle sud, et, d'autre part, que le rotor a ensuite tourné dans le sens de la flèche D pour venir occuper la position de repos dans laquelle il est montré à la figure 2, il est bien évident que l'impulsion motrice suivante qui sera négative, ne permettra pas au rotor de franchir un pas étant donné que la partie polaire 3a sera alors un pôle sud et la partie 3b un pôle nord. Par contre la seconde impulsion motrice après le passage en position de travail de la bascule ainsi que celles qui suivront auront la polarité correcte pour faire tourner le rotor en marche arrière, mais lorsque la bascule sera ramenée en position de retrait, il y aura à nouveau le risque que le rotor ne prenne pas la bonne position de repos pour pouvoir tourner tout de suite en marche avant.

Naturellement, si le rotor avait tourné dans le sens contraire à celui de la flèche D quand la bascule venait occuper sa position de travail, il n'y aurait eu aucune impulsion motrice de perdue à ce moment là, mais cela n'exclut pas la possibilité que le rotor rate un pas après le retour de la bascule en position de retrait.

Il faudrait donc munir la montre d'un dispositif de détection pour vérifier si le rotor a bien tourné après chaque déplacement de la bascule et de moyens pour envoyer une impulsion motrice de rattrapage si tel n'était pas le cas, ce qui rendrait le circuit de commande du moteur nettement plus compliqué.

Cet inconvénient que présente également la forme d'exécution de la figure 6, peut être évité en choisissant un mode de réalisation semblable à ceux qui sont représentés partiellement aux figures 7a et 7b pour lesquelles les éléments identiques ou correspondants portent les mêmes repères.

Dans les deux cas le moteur 1 est exactement le même que dans les exemples de réalisation décrits précédemment. Les mêmes repères ont donc été conservés pour désigner ses différentes parties.

Comme celui de la figure 6, le dispositif d'inversion de sens de rotation comprend un support 107 en matériau non-magnétique qui peut pivoter dans un plan parallèle à la surface du stator 3 autour d'un axe non représenté, mais ce support ne porte plus ici, à son extrémité, qu'une seule pastille en matériau magnétique 109.

Pour éviter qu'une impulsion motrice puisse être perdue lorsque le moteur passe de marche avant en marche arrière il faut que, pour aller de sa position de retrait à sa position de travail située au-dessus de l'une des encoches 33a, 33b du stator 3, la pastille 109 suive une trajectoire qui lui permette d'entraîner l'aimant 17 du rotor 15 et d'obliger celui-ci à tourner dans le sens de la marche arrière, ceci indépendamment de la position de repos qu'occupait le rotor avant le déplacement de la pastille.

Pour illustrer cela on a représenté sur les figures 7a et 7b la pastille 109 dans sa position de retrait avec le support 107 en pointillés, dans sa position de travail avec le support en trait plein et, pour la clarté du dessin, sans le support, dans une position intermédiaire où cette pastille se trouve dans la direction de l'axe d'aimantation A de l'aimant du rotor, au voisinage immédiat de l'un des pôles de celui-ci, en l'occurence le pôle nord, alors que le rotor occupe l'une de ses premières positions de repos. A partir de cette position intermédiaire la pastille 109 entraîne le rotor pour l'amener dans celle de ses secondes positions de repos qui est la bonne pour qu'il puisse tourner en réponse à la première impulsion motrice qui sera appliquée ensuite au moteur.

Inversément, lorsque la pièce magnétique 109 retournera dans sa position de retrait, elle entraînera le rotor dans le sens de la flèche D et l'amènera automatiquement dans la première position de repos qui est la bonne pour qu'il n'y ait pas non plus de perte d'impulsion au moment où le moteur recommencera à fonctionner en marche avant.

La figure 7a correspond au cas où, vu les positions du moteur et de l'organe de manoeuvre non représenté qui permet de commander le pivotement du support 107, on est obligé, pour que le rotor soit entraîné dans le bons sens, de prévoir, pour la pastille 109, une position de retrait située du côté du stator opposé à celui de la bobine, que ce soit du fait de cette dernière ou pour une autre raison. La position de travail de la pastille doit alors nécessairement se trouver au voisinage de l'encoche 33b du stator qui est la plus éloignée de l'organe de manoeuvre. Ceci impose de prévoir un support qui contourne l'axe 19 du rotor lorsque la pastille occupe sa position de travail.

Au contraire, dans la variante de la figure 7b, la position de retrait de l'élément magnétique 109 se situe au-dessus ou en arrière de la bobine 11 du moteur. La position de travail de la pastille 109 devant alors se situer au-dessus de l'encoche 33a, le support 107 peut avoir une forme plus simple que dans le cas précédent. De plus une telle disposition autorise a remplacer la pastille et son support par une bascule réalisée entièrement en matériau magnétique.

Bien entendu, la situation serait différente si, par exemple, la position de l'organe de commande par rapport au moteur n'était pas celle supposée dans le cas des figures 7a et 7b ou si l'emplacement des encoches 33a, 33b et les positions de repos du rotor étaient modifiées de façon que le sens de marche normale du moteur ne soit pas celui de la flèche D mais le sens inverse.

Par ailleurs, il est clair que la forme d'exécution des figures 7a et 7b, qui a l'avantage de rester simple, n'est pas la seule qui permette d'atteindre le but recherché. Par exemple un système comprenant deux pastilles en matériau magnétique prévues pour coopérer chacune avec une encoche du stator et portées par deux supports différents qui pourraient pivoter autour d'un même axe ou de deux axes parallèles à la manière d'une paire de ciseaux conviendrait aussi.

Ce que l'on vient de décrire c'est en fait plusieurs dispositifs d'inversion de sens de rotation qui peuvent être associés à un même moteur. Il est bien évident qu'inversément chacun de ces dispositifs pourrait être utilisé tel quel ou seulement légèrement modifié, avec d'autres moteurs de même type que celui qui a été choisi comme exemple mais réalisés différemment. Par exemple, au lieu d'encoches, la paroi interne du stator pourrait présenter des plats parallèles, diamétralement opposés et définissant pour le rotor un premier axe d'équilibre statique qui leur est perpendiculaire, ou une combinaison d'encoches et de plats.

De tels dispositifs pourraient également convenir pour des moteurs à stator en deux pièces où le positionnement du rotor est assuré par un léger décalage entre les deux pièces polaires.

D'autre part, les formes d'exécution qui ont été décrites ou envisagées pour le dispositif d'inversion de sens de rotation sont parmi les plus simples à réaliser et les moins coûteuses mais on peut en concevoir beaucoup d'autres qui conviendraient également pour ce type de moteur. Par exemple il serait possible de faire appel à des systèmes à plusieurs bras articulés pour déplacer le ou les éléments magnétiques, ce déplacement ne se faisant pas nécessairement dans un plan, ni suivant une trajectoire circulaire. On pourrait également envisager de multiplier le nombre des éléments magnétiques.

Enfin, il est important de rappeler que l'invention peut aussi

0127112

s'appliquer à d'autres genres de moteurs pas-à-pas. A ce propos il faut signaler que le ou les pièces en matériau magnétique qui serviront à réaliser le système d'inversion de sens de rotation ne seront pas toujours des éléments non magnétisés comme c'était forcément le cas dans les modes de réalisation de l'invention qui ont été décrits, étant donné que le rotor du moteur devait avoir deux positions de repos aussi bien en marche arrière qu'en marche avant. On sera parfois amené à utiliser un ou plusieurs aimants permanents. Il en sera ainsi par exemple si l'on veut réaliser un ensemble moteur bidirectionnel en utilisant le moteur à un seul sens de rotation qui est décrit dans le brevet suisse no 600 660. Dans ce moteur qui est prévu pour tourner par pas de 360° en réponse à des impulsions motrices unipolaires, le rotor n'a plus naturellement qu'une seule position de repos qui lui est aussi imposée par un ou deux aimants fixés au stator.

0127112

REVENDICATIONS

1. Ensemble moteur comprenant un moteur pas-à-pas comportant un rotor, un stator, une bobine couplée magnétiquement au stator et des moyens de positionnement pour assurer au rotor au moins une première position de repos; et un circuit de commande pour produire et appliquer à ladite bobine des impulsions motrices de courant permettant de faire tourner ledit rotor dans un premier sens de rotation, caractérisé par le fait qu'il comprend en outre un dispositif d'inversion de sens de rotation (61) comportant au moins un élément magnétique (63; 101; 109) et des moyens pour déplacer ledit élément entre une position de retrait suffisamment éloignée dudit rotor (15) pour laisser celui-ci occuper ladite première position de repos lorsqu'aucun courant ne circule dans la bobine (11) du moteur (1) et tourner dans ledit premier sens de rotation en réponse auxdites impulsions motrices, et une position de travail dans laquelle ledit élément magnétique impose audit rotor au moins une seconde position de repos pour laquelle celui-ci est amené à tourner dans un second sens de rotation, opposé au premier, en réponse auxdites impulsions motrices.

2. Ensemble moteur selon la revendication 1, caractérisé par le fait que ledit dispositif d'inversion de rotation (61) est conçu pour que, lorsqu'il occupe sa position de travail, l'élément magnétique (63; 101; 109) coopère avec lesdits moyens de positionnement (33a, 33b) pour soumettre le rotor (15) à un couple de positionnement ($C_{PAR}$) d'intensité sensiblement égale à celle du couple de positionnement ($C_{PAV}$) créé par lesdits moyens de positionnement et auquel est soumis ledit rotor lorsque ledit élément magnétique est en position de retrait, ces deux couples étant simplement déphasés angulairement l'un par rapport à l'autre.

3. Ensemble moteur selon la revendication 1 ou 2, caractérisé par le fait que le moteur (1) est un moteur dont le stator (3), de forme essentiellement plane, présente deux parties polaires (3a, 3b) entre lesquelles est ménagé un évidement central (5) délimité par une paroi interne (29) et qui sont reliées entre elles par deux zones de haute réluctance magnétique (7a, 7b), dont le rotor (15) comporte un aimant permanent (17) ayant une paire de pôles magnétiques opposés qui définissent un axe d'aimantation (A), ce rotor étant placé dans ledit évidement central et séparé de ladite paroi interne du stator par un entrefer (31), et dont les moyens de positionnement (33a, 33b) définissent pour ledit rotor deux premières positions de repos opposées dans lesquelles ledit axe d'aimantation est dirigé suivant un premier axe d'équilibre statique (V'V); par le fait que ledit circuit de commande est prévu pour appliquer à la bobine (11) du moteur (1) des impulsions motrices de polarité alternée; et par le fait que ledit dispositif d'inversion de sens de rotation (61) est conçu pour définir avec lesdits moyens de positionnement également deux secondes positions de repos du rotor dans lesquelles ledit axe d'aimantation est dirigé suivant un second axe d'équilibre statique (W'W), lesdits premier et second axes d'équilibre statique étant inclinés dans des directions opposées par rapport à une droite (Y'Y) joignant lesdites zones à haute réluctance magnétique du stator.

4. Ensemble moteur selon la revendication 3, caractérisé par le fait que chacun desdits axes d'équilibre statique (V'V, W'W) est incliné d'un angle α, resp. β, d'environ 45° par rapport à ladite droite (Y'Y) joignant les zones à haute réluctance magnétique (7a, 7b) du stator (3).

5. Ensemble moteur selon la revendication 3 ou 4, caractérisé par le fait que lesdits moyens de positionnement comprennent deux encoches (33a, 33b) diamétralement opposées, pratiquées dans ladite paroi interne (29) du stator (3), et que ledit élément magnétique est constitué par une pièce en forme de bascule, réalisée en un matériau de haute perméabilité magnétique, qui peut pivoter entre deux positions extrêmes dans un plan sensiblement parallèle au stator (3) du moteur (1) et dont une extrémité recouvre au moins partiellement l'une desdites encoches (33a, 33b) et la zone de l'entrefer (31) située en regard de cette encoche, lorsque ladite pièce occupe la position extrême qui est sa position de travail.

6. Ensemble moteur selon la revendication 3 ou 4, caractérisé par le fait que lesdits moyens de positionnement comprennent deux encoches (33a, 33b) diamétralement opposées, pratiquées dans ladite paroi interne (29) du stator (3) et que ledit élément magnétique est constitué par une pièce en forme de bascule (63), réalisée en un matériau de haute perméabilité magnétique, qui peut pivoter entre deux positions extrêmes dans un plan sensiblement parallèle au stator (3) du moteur (1) et dont une extrémité (71) recouvre au moins partiellement chacune desdites encoches (33a, 33b) et les zones de l'entrefer (31) situées en regard de ces encoches, lorsque ladite pièce occupe la position extrême qui est sa position de travail.

7. Ensemble moteur selon la revendication 3 ou 4, caractérisé par le fait que lesdits moyens de positionnement comprennent deux encoches (33a, 33b) diamétralement opposées, pratiquées dans ladite paroi interne (29) du stator (3); que ledit élément magnétique est constitué par une pastille en matériau de haute perméabilité magnétique (109), prévue pour recouvrir au moins partiellement l'une desdites encoches (33a, 33b) et la zone de l'entrefer (31) située en regard de cette encoche lorsqu'elle occupe sa position de travail; et que les moyens pour déplacer l'élément magnétique comprennent un élément de support (107) en matériau non magnétique, dont ladite pastille est solidaire et qui peut pivoter dans un plan sensiblement parallèle au stator (3) du moteur (1), ainsi que des moyens pour faire pivoter ledit élément de support entre deux positions extrêmes correspondant aux positions de retrait et de travail de la pastille.

8. Ensemble moteur selon la revendication 3 ou 4, caractérisé par le fait que lesdits moyens de positionnement comprennent deux encoches (33a, 33b) diamétralement opposées, pratiquées dans ladite paroi interne (29) du stator (3), que ledit dispositif d'inversion de sens de rotation (61) comprend deux éléments magnétiques (101, 103) constitués chacun par une pastille en matériau de haute perméabilité magnétique, prévue pour recouvrir au moins partiellement l'une desdites encoches (33a, 33b) et la zone de l'entrefer (31) située en regard de cette encoche, lorsqu'elle occupe sa position de travail; et que les moyens pour déplacer ces éléments magnétiques comprennent un élément de support en matériau non magnétique, dont lesdites pastilles sont solidaires, et qui peut pivoter dans un plan sensiblement parallèle au stator (3) du moteur (1) ainsi que des moyens pour faire pivoter ledit élément de support entre deux positions extrêmes correspondant aux positions de retrait et de travail des pastilles.

Fig. 1a

Fig. 1

1/4

0127112

Fig.2

Fig.2a

Fig. 3

Fig.4

Fig.5

0127112

Fig.6

Fig.7a

Fig.7b

Office européen
des brevets

**RAPPORT DE RECHERCHE EUROPEENNE**

**0127112**
Numéro de la demande

EP 84 10 5823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | PATENTS ABSTRACTS OF JAPAN, vol. 2, no. 150, 15 décembre 1978, page 9684 E 78; & JP - A - 53 120 114 (CITIZEN TOKEI K.K.) 20-10-1978 | 1-8 | G 04 C 13/11 H 02 K 37/00 |
| A | GB-A-1 520 968 (K.K. DAINI SEIKOSHA) * Page 1, lignes 15-63; figures * | 1 | |
| A | PATENTS ABSTRACTS OF JAPAN, vol. 1, no. 50, 16 mai 1977, page 3206 E 76; & JP - A - 51 145 807 (HITACHI SEISAKUSHO K.K.) 15-12-1976 | 1 | |

DOMAINES TECHNIQUES RECHERCHES (Int. Cl. ³)

G 04 C
H 02 K

Le présent rapport de recherche a été établi pour toutes les revendications

| Lieu de la recherche | Date d'achèvement de la recherche | Examinateur |
|---|---|---|
| LA HAYE | 29-08-1984 | EXELMANS U.G.J.R. |